# EUROPEAN PATENT APPLICATION

(11) **EP 4 707 139 A1**
(43) Date of publication of application: **11.03.2026**
(21) Application number: 24198871.6
(22) Date of filing: 06.09.2024
(51) Int. Cl.: B62D 59/04, B62D 15/02, B62D 13/06

(54) **A CONTROL UNIT AND A METHOD FOR REVERSING A VEHICLE-TRAILER COMBINATION TOWARD A TARGET LOCATION**

(71) Applicant: Volvo Truck Corporation, 405 08 Göteborg (SE)
(72) Inventor: LARSSON, Lena, 426 74 Västra Frölunda (SE); PETTERSSON, Emil, 449 43 Nol (SE)
(74) Representative: Zacco Sweden AB

(57) **Abstract**

A control unit for reversing a vehicle-trailer combination toward a target location, wherein the vehicle and the trailer each are equipped with driven wheels, and wherein the control unit is configured to: obtain sensor data, wherein the sensor data comprises an angular offset α of the trailer relative to the target location; determine whether the angular offset α of the trailer relative to the target location is within a predetermined alignment margin; and shift propulsion control to the driven wheels of the trailer for movement toward the target location in response to the angular offset α of the trailer being within the predetermined alignment margin.

## Description

### TECHNICAL FIELD

The disclosure relates generally to vehicle control systems. In particular aspects, the disclosure relates to a control unit and a method for reversing a vehicle-trailer combination toward a target location. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Accurate docking and reversing are critical operations when maneuvering a vehicle-trailer combination, particularly when positioning the trailer at loading bays. Achieving high precision in these tasks is essential to prevent costly damages and reduce vehicle downtime. Conventional methods for reversing often rely on manual control or basic sensor systems, which may not provide the necessary accuracy. As a result, incidents such as collisions with other vehicles or structures can occur, leading to repair costs and operational delays. These incidents may also pose safety risks, such as endangering personnel working at the loading site.

Hence, there is a need for an improved vehicle control system that can enhance the accuracy of reversing a vehicle-trailer combination, ensure safe and efficient operations, and minimize the potential for damage and injury.

### SUMMARY

According to a first aspect of the disclosure, a control unit for reversing a vehicle-trailer combination toward a target location, wherein the vehicle and the trailer each are equipped with driven wheels, is disclosed. The control unit is configured to obtain sensor data, wherein the sensor data comprises an angular offset a of the trailer relative to a target location. The control unit is further configured to determine whether the angular offset α of the trailer relative to the target location is within a predetermined alignment margin, and in response to the angular offset α of the trailer being within the predetermined alignment margin, shift propulsion control to the driven wheels of the trailer for movement toward the target location. The first aspect of the disclosure may seek to ensure safe and efficient operations while reversing a vehicle-trailer combination toward a target location. A technical benefit may include that propulsion is shifted to the driven wheels of the trailer only when the trailer is appropriately aligned with the target location, thereby reducing the need to steer the vehicle-trailer combination during reverse movement.

Optionally in some examples, including in at least one preferred example, the propulsion control is shifted fully to the driven wheels of the trailer by fully disengaging the driven wheels of the vehicle. A technical benefit may include improved trailer alignment toward the target location when the vehicle when propulsion is exclusively trailer-based.

Optionally in some examples, including in at least one preferred example, the propulsion control is shifted partially to the driven wheels of the trailer by partially disengaging the driven wheels of the vehicle. A technical benefit may include that the vehicle can still contribute to propulsion when the trailer carries a heavy load.

Optionally in some examples, including in at least one preferred example, the trailer comprises a steerable axle, and the control unit is further configured to control the steerable axle to fine-tune the alignment of the trailer relative to the target location. A technical benefit may include the capability to compensate for any misalignment the trailer experiences while advancing toward the target location.

Optionally in some examples, including in at least one preferred example, the target location is one of a series of sequential locations along a predefined path, and upon reaching the target location a subsequent location along the path becomes the target location, and wherein the angular offset α of the trailer is adjusted upon reaching each target location along the path. A technical benefit may include improved reverse maneuvering when obstacles need to be avoided and more precise navigation through a complex route is required.

Optionally in some examples, including in at least one preferred example, the control unit is configured to receive input from a remote control to allow operating the vehicle-trailer combination from a position adjacent to the target location, thereby facilitating precise control over docking movements. A technical benefit may include improved maneuvering in confined spaces and crowded environments where full visibility behind the vehicle-trailer combination is necessary.

Optionally in some examples, including in at least one preferred example, the trailer is an e-trailer with driven wheels powered by an onboard battery system and/or an external power source. A technical benefit may include the elimination of the need for mechanical power take-off from the vehicle.

Optionally in some examples, including in at least one preferred example, the sensor data further comprises distance of the trailer to the target location, and wherein the control unit is configured to stop movement of the vehicle-trailer combination upon reaching a predefined distance to the target location. A technical benefit may include ensuring sufficient clearance to fully extend a tailgate or liftgate, as well as to open the rear doors.

According to a second aspect of the disclosure, a vehicle-trailer combination is disclosed. The vehicle-trailer combination comprises one or more sensors configured to measure the distance and angular offset of the trailer relative to a target location, and a control unit according to the first aspect of the disclosure. The second aspect of the disclosure may seek to ensure safe and efficient operations while reversing a vehicle-trailer combination toward a target location. A technical benefit may include that propulsion is shifted to the driven wheels of the trailer only when the trailer is appropriately aligned with the target location, thereby reducing the need to steer the vehicle-trailer combination during reverse movement.

Optionally in some examples, including in at least one preferred example, the one or more sensors is at least one of an optical camera, a radar sensor, a lidar sensor, a heat sensor or a combination thereof. A technical benefit may include enhanced accuracy and reliability in navigating toward the target location.

According to a third aspect of the disclosure, a method for reversing a vehicle-trailer combination toward a target location, wherein the vehicle and the trailer each are equipped with driven wheels, is disclosed. The method comprises obtaining sensor data, wherein the sensor data comprises angular offset of the trailer relative to a target location. The method further comprises determining whether the angular offset of the trailer relative to the target location is within a predetermined alignment margin. The method further comprises shifting propulsion control to the driven wheels of the trailer for movement towards the target location in response to the angular offset of the trailer being within the predetermined alignment margin. The third aspect of the disclosure may seek to ensure safe and efficient operations while reversing a vehicle-trailer combination toward a target location. A technical benefit may include that propulsion is shifted to the driven wheels of the trailer only when the trailer is appropriately aligned with the target location, thereby reducing the need to steer the vehicle-trailer combination during reverse movement.

Optionally in some examples, including in at least one preferred example, shifting comprises fully shifting the propulsion control to the driven wheels of the trailer by fully disengaging the driven wheels of the vehicle. A technical benefit may include improved ability to maintain trailer alignment toward the target location as propulsion is exclusively trailer-based.

Optionally in some examples, including in at least one preferred example, shifting comprises partially shifting the propulsion control to the driven wheels of the trailer by partially disengaging the driven wheels of the vehicle. A technical benefit may include that the vehicle can still contribute to propulsion when the trailer carries a heavy load.

Optionally in some examples, including in at least one preferred example, the trailer comprises a steerable axle, and the method further comprises controlling the steerable axle to fine-tune the alignment of the trailer relative to the target location. A technical benefit may include the capability to compensate for any misalignment the trailer experiences while advancing toward the target location.

Optionally in some examples, including in at least one preferred example, the target location is one of a series of sequential locations along a predefined path, and upon reaching the target location a subsequent location along the path becomes the target location, and wherein the method further comprises adjusting angular offset of the trailer upon reaching each target location along the path. A technical benefit may include improved reverse maneuvering when obstacles need to be avoided and more precise navigation through a complex route is required.

Optionally in some examples, including in at least one preferred example, the method further comprises receiving input from a remote control to allow operating the tractor-trailer combination from a position adjacent to the target location, thereby facilitating precise control over movement towards the target location. A technical benefit may include improved maneuvering in confined spaces and crowded environments where full visibility behind the vehicle-trailer combination is necessary.

Optionally in some examples, including in at least one preferred example, the trailer is an e-trailer with driven wheels powered by an onboard battery system and/or an external power source. A technical benefit may include the elimination of the need for mechanical power take-off from the vehicle.

Optionally in some examples, including in at least one preferred example, the vehicle sensor data further comprises distance of the trailer to the target location, and wherein the method further comprises stopping the vehicle-trailer combination upon reaching a predefined distance to the target location. A technical benefit may include ensuring sufficient clearance to fully extend a tailgate or liftgate, as well as to open the rear doors.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
FIG. 1 illustrates an example of a vehicle-trailer combination reversing toward a target location.
FIG. 2 illustrates an example of a vehicle-trailer combination reversing along a predefined path where the target location is one of a series of sequential target locations.
FIG. 3 is a flow chart of a method for reversing a vehicle-trailer combination toward a target location.
FIG. 4A schematically illustrates a control unit.
FIG. 4B shows an example of a computer program product.
FIG. 5 is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

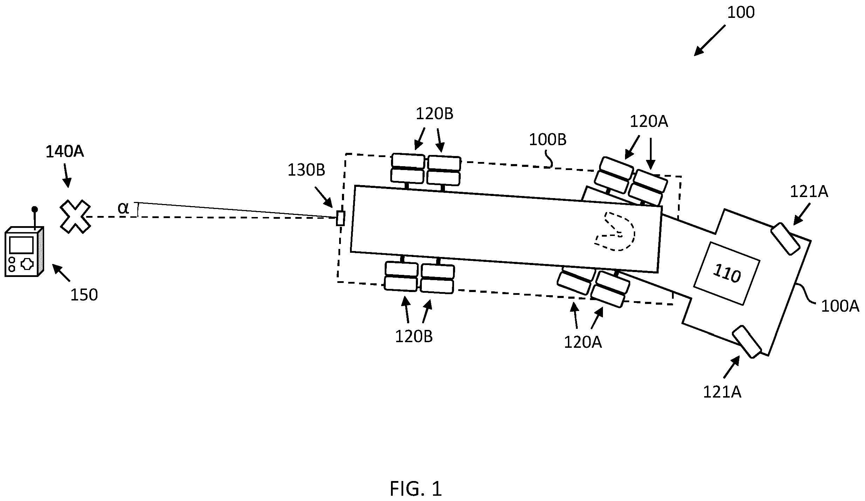

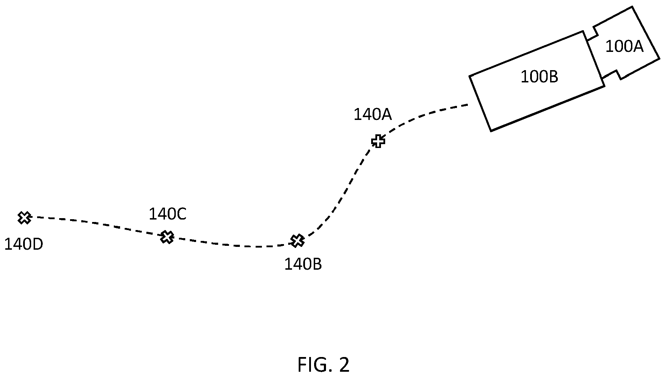

FIGS. 1-2 illustrate a first aspect of the disclosure relating to a control unit 110 for reversing a vehicle-trailer combination 100 toward a target location. The vehicle-trailer combination comprises a vehicle 100A and a trailer 100B, wherein the vehicle 100A and the trailer 100B each are equipped with driven wheels 120A, 120B. Typically, vehicle 100A comprises steerable wheels 121A on the front axle and driven wheels 120A on the rear axles, along with a control unit 110 that manages functions such as propulsion for both the vehicle's and the trailer's driven wheels 120A, 120B.

The vehicle-trailer combination 100 shown in FIGS. 1-2 features a tractor unit connected to a trailer via a fifth wheel coupling. However, the combination 100 can include any type of vehicle linked to one or more trailers, provided that both the vehicle 100A and the trailer 100B are equipped with driven wheels 120A, 120B. For example, the vehicle-trailer combination 100 may be a tractor unit with semitrailer, a tractor unit with a semitrailer and a center axle trailer, a tractor unit with two semitrailers, a truck with center axle trailer, a truck with a drawbar trailer, or a truck with a dolly and a semitrailer. The vehicle may also be an agricultural or forestry tractor, with the trailer being any type of implement equipped with driven wheels. In another example, the vehicle may be any type of heavy-duty machinery, and the trailer may be any attachment equipped with driven wheels. In some examples, the trailer 110B may be an e-trailer with driven wheels powered by an onboard battery system and/or an external power source.

The control unit 110 is configured to obtain sensor data, wherein the sensor data comprises an angular offset α of the trailer 100B relative to the target location 140A. The angular offset α indicates the trailer's misalignment with the target, i.e., an angular offset of 0 degrees indicates perfect alignment with the target. In one example, shown in FIG. 1, the angular offset α indicates the angle between a line perpendicular to the trailer's rear end and another line extending toward the target location 140A, both originating from the center of the trailer's rear end. The control unit is further configured to determine whether the angular offset α of the trailer relative to the target location 140A is within a predetermined alignment margin. The predetermined alignment margin may for example be an interval [-αₘₐₓ, αₘₐₓ] that enables positioning near the target location 140A. The value of αₘₐₓ reflects the required accuracy and should generally be small to ensure precise alignment with the target. The value of αₘₐₓ may also vary depending on the distance to the target location, since a larger misalignment may be tolerable at shorter distances. If the angular offset α of the trailer 100B is within the predetermined alignment margin propulsion control is shifted to the driven wheels 120B of the trailer 100B for movement toward the target location 140A. An advantage of shifting propulsion to the driven wheels of the trailer when it is properly aligned with the target location is the reduction in the need to steer the vehicle-trailer combination during reverse movement. Only minor adjustments to the angular offset α may be required once propulsion has been shifted to the driven wheels 120B of the trailer. The angular offset α may be checked multiple times as the vehicle-trailer combination moves toward the target location 140A to ensure that the offset α remains within the predetermined alignment margin. Adjustments can be made by steering either the vehicle or the trailer to maintain the angular offset α within this margin. In some examples, the trailer 100B may comprise a steerable axle, and the control unit 110 may be further configured to control the steerable axle to fine-tune the alignment of the trailer 100B relative to the target location 140A, thereby ensuring that the angular offset α stays within the predetermined alignment margin.

In one example, the sensor data may further comprise distance of the trailer to the target location 140A, and the control unit 110 may further be configured to stop movement of the vehicle-trailer combination 100 upon reaching a predefined distance to the target location 140A. This will ensure sufficient clearance to fully extend a tailgate or liftgate, as well as to open the rear doors, of the trailer.

In one example, the propulsion control is shifted fully to the driven wheels 120B of the trailer 100B by fully disengaging the driven wheels 120A of the vehicle 100A. The vehicle will then follow the direction dictated by the angular offset α of the trailer 100B. A key advantage of fully disengaging the driven wheels 120A of the vehicle is that it prevents the vehicle's propulsion from interfering with the trailer's alignment. Consequently, this approach facilitates more precise trailer alignment toward the target location when propulsion is exclusively trailer-based.

In another example, the propulsion control is shifted partially to the driven wheels 120B of the trailer 100B by partially disengaging the driven wheels 120A of the vehicle 100A. Maintaining partial propulsion from the vehicle offers the advantage of assisting the movement toward the target location, which may be especially useful under conditions such as heavy trailer loads or uphill inclines.

The control unit 110 may also be configured to receive input from a remote control 150 to allow operating the vehicle-trailer combination from a position adjacent to the target location, thereby facilitating precise control over docking movements. The remote control 150 will typically comprise an interface for wireless communications, such as 3GPP or Bluetooth, to communicate with the control unit 110. A technical benefit may include improved maneuvering in confined spaces and crowded environments where full visibility behind the vehicle-trailer combination is necessary. In some examples, the remote control 150 can also be configured to set its own location as the target location 140A, enabling the operator to guide the vehicle from behind by positioning themselves at the target location with the remote control 150.

The target location can be also determined in several other ways. Typically, the target location 140A might be a geographic coordinate received by the control unit from an external device or stored in memory. For example, the target location could be a pre-stored location, such as a frequently used parking spot for the vehicle-trailer combination 100. In another example, the target location 140A might be designated by an operator using a touch screen display, which shows the view from a rear-view camera. The operator may then select the target location by, for example, pointing at a loading bay or dock on the display.

The target location may also be one of a series of sequential locations 140A, 140B, 140C, 140D along a predefined path. Upon reaching the target location, a subsequent location along the path will become the next target. The angular offset α of the trailer may then be adjusted, by steering either the vehicle or the trailer, as each target is reached. Navigating along a predefined path enhances maneuvering by avoiding obstacles and enabling more precise navigation through more complex routes.

FIGS. 1-2 also illustrate a second aspect of the disclosure relating to a vehicle-trailer combination 100 configured for reversing toward a target location. The vehicle-trailer combination 100 comprises one or more sensors 130B configured to measure angular offset of the trailer 100B relative to a target location 140A, and a control unit 110 according to any of the examples described for the first aspect of the disclosure.

The one or more sensors 130B may an optical camera, a radar sensor, a lidar sensor or any combination thereof. An optical camera can be positioned at the center rear end of the trailer, oriented so that the center of its field of view aligns with a line perpendicular to the trailer's rear end. Consequently, the angle between the center of the camera's field of view and the target location is the angular offset α. Radar and lidar sensors may be utilized to determine the angular offset α when the target location involves solid objects or structures. A heat sensor may be utilized to determine the angular offset α when the target location includes any heat-emitting objects or individuals.

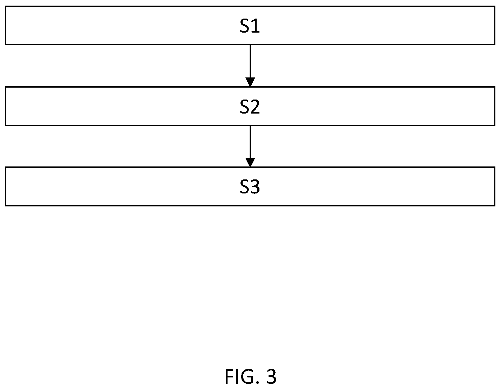

FIG. 3 illustrate a third aspect of the disclosure relating to a method for reversing a vehicle-trailer combination 100 toward a target location 140A, where the vehicle 100A and the trailer 100B each are equipped with driven wheels 120A, 120B. It should be noted that any of the aforementioned aspects relating to the control unit 110 and the vehicle-trailer combination 100 are also applicable to the method.

The method comprises obtaining S1 sensor data, wherein the sensor data comprises angular offset α of the trailer relative to the target location 120. The angular offset α indicates the trailer's misalignment with the target, i.e., an angular offset of 0 degrees indicates perfect alignment with the target. In one example, the angular offset α is the angle between a line perpendicular to the trailer's rear end and another line extending toward the target location 140A, both originating from the center of the trailer's rear end.

The method further comprises determining S2 whether the angular offset α of the trailer relative to the target location is within a predetermined alignment margin. The predetermined alignment margin may for example be an interval [-αₘₐₓ, αₘₐₓ] that enables positioning near the target location 140A.

The method also comprises shifting S3 propulsion control to the driven wheels of the trailer 100B for movement toward the target location in response to the angular offset α of the trailer 100B being within the predetermined alignment margin. An advantage of shifting propulsion to the driven wheels of the trailer when it is properly aligned with the target location is the reduction in the need to steer the vehicle-trailer combination during reverse movement. Only minor adjustments to the angular offset α may be required once propulsion has been shifted to the driven wheels 120B of the trailer. The angular offset α may be checked multiple times as the vehicle-trailer combination moves toward the target location 140A to ensure that the offset α remains within the predetermined alignment margin. Adjustments can be made by steering either the vehicle or the trailer to maintain the angular offset α within this margin. The trailer 100B may comprise a steerable axle, and the method may further comprise controlling the steerable axle to fine-tune the alignment of the trailer relative to the target location 120, thereby ensuring that the angular offset α stays within the predetermined alignment margin.

In one example, the sensor data may further comprise distance of the trailer to the target location 140A, and the method may further comprises stopping the vehicle-trailer combination 100 upon reaching a predefined distance to the target location 140A. For example, the predefined distance can be set to ensure enough clearance for the full extension of the trailer's tailgate or liftgate, as well as to open the rear doors.

In one example, shifting S3 comprises fully shifting the propulsion control to the driven wheels 120B of the trailer 100B by fully disengaging the driven wheels 120A of the vehicle 100. In this example, the vehicle will follow the direction dictated by the angular offset α of the trailer 100B. A key advantage of fully disengaging the driven wheels 120A of the vehicle is that it prevents the vehicle's propulsion from interfering with the trailer's alignment. Consequently, this approach facilitates more precise trailer alignment toward the target location when propulsion is exclusively trailer-based.

In another example, shifting S3 comprises partially shifting the propulsion control to the driven wheels 120B of the trailer 100B by partially disengaging the driven wheels 120A of the vehicle 100. Maintaining partial propulsion from the vehicle offers the advantage of assisting the movement toward the target location, which may be especially useful under conditions such as heavy trailer loads or uphill inclines.

The target location may be one of a series of sequential locations 140A, 140B, 140C, 140D along a predefined path. Upon reaching the target location, a subsequent location along the path will become the next target. The method may further comprises adjusting angular offset α of the trailer upon reaching each target location along the path. Navigating along a predefined path enhances maneuvering by avoiding obstacles and enabling more precise navigation through more complex routes.

In one example, the method may further comprise receiving input from a remote control 150 to allow operating the tractor-trailer combination 100 from a position adjacent to the target location, thereby facilitating precise control over movement toward the target location. A technical benefit may include improved maneuvering in confined spaces and crowded environments where full visibility behind the vehicle-trailer combination is necessary. In some examples, the remote control 150 can also be configured to set its own location as the target location 140A, enabling the operator to guide the vehicle from behind by positioning themselves at the target location with the remote control 150.

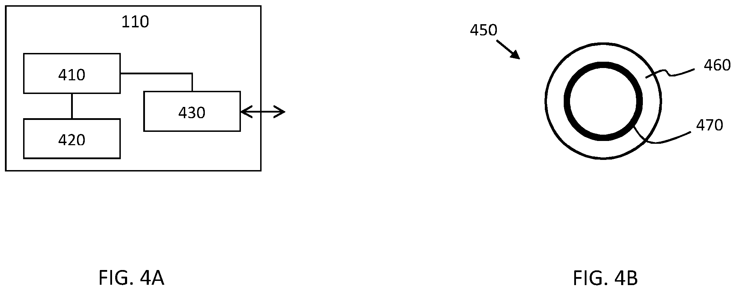

FIG. 4A schematically illustrates, in terms of a number of functional units, the components of a control unit 110 according to aspects of the discussions and methods disclosed herein. This control unit 110 may typically be comprised in the vehicle 100. Processing circuitry 410 is provided using any combination of one or more of a suitable central processing unit CPU, multiprocessor, microcontroller, digital signal processor DSP, etc., capable of executing software instructions stored in a computer program product, e.g., in the form of a storage medium 420. The processing circuitry 410 may further be provided as at least one application specific integrated circuit ASIC, or field programmable gate array FPGA.

Particularly, the processing circuitry 410 is configured to cause the control unit 110 to perform a set of operations, or steps, such as the methods discussed in connection to FIG. 3. For example, the storage medium 420 may store the set of operations, and the processing circuitry 410 may be configured to retrieve the set of operations from the storage medium 420 to cause the control unit 110 to perform the set of operations. The set of operations may be provided as a set of executable instructions. Thus, the processing circuitry 410 is thereby arranged to execute methods as herein disclosed.

The storage medium 420 may also comprise persistent storage, which, for example, can be any single one or combination of magnetic memory, optical memory, solid state memory or even remotely mounted memory.

The control unit 110 may further comprise an interface 430 for communications with at least one external system, such as sensors on the vehicle-trailer combination and a remote control 150. As such the interface 430 may comprise one or more transmitters and receivers, comprising analogue and digital components and a suitable number of ports for wireline or wireless communication.

The processing circuitry 410 controls the general operation of the control unit 110, e.g., by sending data and control signals to the interface 430 and the storage medium 420, by receiving data and reports from the interface 430, and by retrieving data and instructions from the storage medium 420. Other components, as well as the related functionality, of the control node are omitted in order not to obscure the concepts presented herein.

FIG. 4B shows an example of a computer program product. A computer readable medium 460 carrying a computer program 470 comprising program code means for performing the steps of aforementioned method when said program product is run on a computer or on processing circuitry 410 of a control unit 110.

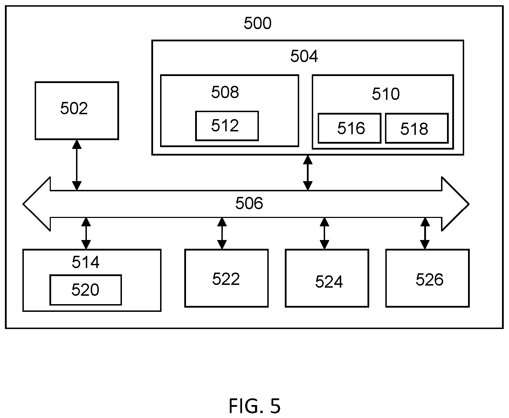

FIG. 5 is a schematic diagram of a computer system 500 for implementing examples disclosed herein. The computer system 500 is adapted to execute instructions from a computer-readable medium to perform these and/or any of the functions or processing described herein. The computer system 500 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 500 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 500 may comprise at least one computing device or electronic device capable of including firmware, hardware, and/or executing software instructions to implement the functionality described herein. The computer system 500 may include processing circuitry 502 (e.g., processing circuitry including one or more processor devices or control units), a memory 504, and a system bus 506. The computer system 500 may include at least one computing device having the processing circuitry 502. The system bus 506 provides an interface for system components including, but not limited to, the memory 504 and the processing circuitry 502. The processing circuitry 502 may include any number of hardware components for conducting data or signal processing or for executing computer code stored in memory 504. The processing circuitry 502 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 502 may further include computer executable code that controls operation of the programmable device.

The system bus 506 may be any of several types of bus structures that may further interconnect to a memory bus (with or without a memory controller), a peripheral bus, and/or a local bus using any of a variety of bus architectures. The memory 504 may be one or more devices for storing data and/or computer code for completing or facilitating methods described herein. The memory 504 may include database components, object code components, script components, or other types of information structure for supporting the various activities herein. Any distributed or local memory device may be utilized with the systems and methods of this description. The memory 504 may be communicably connected to the processing circuitry 502 (e.g., via a circuit or any other wired, wireless, or network connection) and may include computer code for executing one or more processes described herein. The memory 504 may include non-volatile memory 508 (e.g., read-only memory (ROM), erasable programmable read-only memory (EPROM), electrically erasable programmable read-only memory (EEPROM), etc.), and volatile memory 510 (e.g., random-access memory (RAM)), or any other medium which can be used to carry or store desired program code in the form of machine-executable instructions or data structures and which can be accessed by a computer or other machine with processing circuitry 502. A basic input/output system (BIOS) 512 may be stored in the non-volatile memory 508 and can include the basic routines that help to transfer information between elements within the computer system 500.

The computer system 500 may further include or be coupled to a non-transitory computer-readable storage medium such as the storage device 514, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 514 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 514 and/or in the volatile memory 510, which may include an operating system 516 and/or one or more program modules 518. All or a portion of the examples disclosed herein may be implemented as a computer program 520 stored on a transitory or non-transitory computer-usable or computer-readable storage medium (e.g., single medium or multiple media), such as the storage device 514, which includes complex programming instructions (e.g., complex computer-readable program code) to cause the processing circuitry 502 to carry out actions described herein. Thus, the computer-readable program code of the computer program 520 can comprise software instructions for implementing the functionality of the examples described herein when executed by the processing circuitry 502. In some examples, the storage device 514 may be a computer program product (e.g., readable storage medium) storing the computer program 520 thereon, where at least a portion of a computer program 520 may be loadable (e.g., into a processor) for implementing the functionality of the examples described herein when executed by the processing circuitry 502. The processing circuitry 502 may serve as a controller or control system for the computer system 500 that is to implement the functionality described herein.

The computer system 500 may include an input device interface 522 configured to receive input and selections to be communicated to the computer system 500 when executing instructions, such as from a keyboard, mouse, touch-sensitive surface, etc. Such input devices may be connected to the processing circuitry 502 through the input device
interface 522 coupled to the system bus 506 but can be connected through other interfaces, such as a parallel port, an Institute of Electrical and Electronic Engineers (IEEE) 1394 serial port, a Universal Serial Bus (USB) port, an IR interface, and the like. The computer system 500 may include an output device interface 524 configured to forward output, such as to a display, a video display unit (e.g., a liquid crystal display (LCD) or a cathode ray tube (CRT)). The computer system 500 may include a communications interface 526 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A control unit 110 for reversing a vehicle-trailer combination 100 toward a target location 140A, wherein the vehicle 100A and the trailer 100B each are equipped with driven wheels 120A, 120B, and wherein the control unit is configured to: obtain sensor data, wherein the sensor data comprises an angular offset α of the trailer 100B relative to the target location 140A; determine whether the angular offset α of the trailer relative to the target location 140A is within a predetermined alignment margin; and shift propulsion control to the driven wheels 120B of the trailer 100B for movement toward the target location 140A in response to the angular offset α of the trailer 100B being within the predetermined alignment margin.

Example 2: The control unit 110 of example 1, wherein the propulsion control is shifted fully to the driven wheels 120B of the trailer 100B by fully disengaging the driven wheels 120A of the vehicle 100A.

Example 3: The control unit 110 of example 1, wherein the propulsion control is shifted partially to the driven wheels 120B of the trailer 100B by partially disengaging the driven wheels 120A of the vehicle 100A.

Example 4: The control unit 110 of any of examples 1-3, wherein the trailer 100B comprises a steerable axle, and the control unit 110 is further configured to control the steerable axle to fine-tune the alignment of the trailer 100B relative to the target location 140A.

Example 5: The control unit 110 of any of examples 1-4, wherein the target location is one of a series of sequential locations 140A, 140B, 140C, 140D along a predefined path, and upon reaching the target location a subsequent location along the path becomes the target location, and wherein the angular offset α of the trailer is adjusted upon reaching each target along the path.

Example 6: The control unit 110 of any of examples 1-5, wherein the control unit 110 is configured to receive input from a remote control 150 to allow operating the vehicle-trailer combination from a position adjacent to the target location, thereby facilitating precise control over docking movements.

Example 7: The control unit of any of examples 1-6, wherein the trailer 110B is an e-trailer with driven wheels powered by an onboard battery system and/or an external power source.

Example 8: The control unit 110 of any of examples 1-7, wherein the sensor data further comprises distance of the trailer to the target location 140A, and wherein the control unit is configured to stop the vehicle-trailer combination 100 upon reaching a predefined distance to the target 140A.

Example 9: A vehicle-trailer combination 100, comprising one or more sensors 130B configured to measure the distance and angular offset of the trailer 100B relative to a target 140A, and a control unit according to any of the examples 1-8.

Example 10: The vehicle-trailer combination 100, wherein the one or more sensors 130B is at least one of an optical camera, a radar, a lidar sensor, a heat sensor or a combination thereof.

Example 11: A method for reversing a vehicle-trailer combination 100 toward a target location 140A, wherein the vehicle 100A and the trailer 100B each are equipped with driven wheels 120A, 120B, and wherein the method comprises: obtaining S1 sensor data, wherein the sensor data comprises angular offset α of the trailer relative to the target location 120; determining S2 whether the angular offset α of the trailer relative to the target location is within a predetermined alignment margin; and shifting S3 propulsion control to the driven wheels of the trailer 100B for movement toward the target location in response to the angular offset α of the trailer 100B being within the predetermined alignment margin.

Example 12: The method of example 11, wherein shifting S3 comprises fully shifting the propulsion control to the driven wheels 120B of the trailer 100B by fully disengaging the driven wheels 120A of the vehicle 100.

Example 13: The method of example 11, wherein shifting S3 comprises partially shifting the propulsion control to the driven wheels 120B of the trailer 100B by partially disengaging the driven wheels 120A of the vehicle 100.

Example 14: The method of any of examples 11-13, wherein the trailer 100B comprises a steerable axle, and the method further comprises controlling the steerable axle to fine-tune the alignment of the trailer relative to the target location 120.

Example 15: The method of any of examples 11-14, wherein the target location is one of a series of sequential locations 140A, 140B, 140C, 140D along a predefined path, and upon reaching the target location a subsequent location along the path becomes the target location, and wherein the method further comprises adjusting angular offset α of the trailer upon reaching each target location along the path.

Example 16: The method of any of examples 11-15, wherein the method further comprises receiving input from a remote control 150 to allow operating the tractor-trailer combination from a position adjacent to the target location, thereby facilitating precise control over movement toward the target location.

Example 17: The method of any of examples 11-16, wherein the trailer 100B is an e-trailer with driven wheels powered by an onboard battery system and/or an external power source.

Example 18: The method of any of examples 11-17, wherein the vehicle sensor data further comprises distance of the trailer to the target location 140A, and wherein the method further comprises stopping the vehicle-trailer combination 100 upon reaching a predefined distance to the target location 140A.

Example 19: A computer program product 450 comprising program code for performing, when executed by the processing circuitry 410 of a control unit 110, the method of any of examples 11-18.

Example 20: A non-transitory computer-readable storage medium 460 comprising instructions 470, which when executed by the processing circuitry 410 of a control unit 110, cause the processing circuitry 410 to perform the method of any of examples 11-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A control unit (110) for reversing a vehicle-trailer combination (100) toward a target location (140A), wherein the vehicle (100A) and the trailer (100B) each are equipped with driven wheels (120A, 120B), and wherein the control unit is configured to:
obtain sensor data, wherein the sensor data comprises an angular offset α of the trailer (100B) relative to the target location (140A);
determine whether the angular offset α of the trailer relative to the target location (140A) is within a predetermined alignment margin; and
shift propulsion control to the driven wheels (120B) of the trailer (100B) for movement toward the target location (140A) in response to the angular offset α of the trailer (100B) being within the predetermined alignment margin.

2. The control unit (110) of claim 1, wherein the propulsion control is shifted fully to the driven wheels (120B) of the trailer (100B) by fully disengaging the driven wheels (120A) of the vehicle (100A).

3. The control unit (110) of claim 1, wherein the propulsion control is shifted partially to the driven wheels (120B) of the trailer (100B) by partially disengaging the driven wheels (120A) of the vehicle (100A).

4. The control unit (110) of any of claims 1-3, wherein the trailer (100B) comprises a steerable axle, and the control unit (110) is further configured to control the steerable axle to fine-tune the alignment of the trailer (100B) relative to the target location (140A).

5. The control unit (110) of any of claims 1-4, wherein the target location is one of a series of sequential locations (140A, 140B, 140C, 140D) along a predefined path, and upon reaching the target location a subsequent location along the path becomes the target location, and wherein the angular offset α of the trailer is adjusted upon reaching each target along the path.

6. The control unit (110) of any of claims 1-5, wherein the control unit (110) is configured to receive input from a remote control (150) to allow operating the vehicle-trailer combination from a position adjacent to the target location, thereby facilitating precise control over docking movements.

7. A vehicle-trailer combination (100), comprising one or more sensors (130B) configured to measure the distance and angular offset of the trailer (100B) relative to a target (140A), and a control unit according to any of the claims 1-6.

8. The vehicle-trailer combination (100), wherein the one or more sensors (130B) is at least one of an optical camera, a radar, a lidar sensor, a heat sensor or a combination thereof.

9. A method for reversing a vehicle-trailer combination (100) toward a target location (140A), wherein the vehicle (100A) and the trailer (100B) each are equipped with driven wheels (120A, 120B), and wherein the method comprises:
obtaining (S1) sensor data, wherein the sensor data comprises angular offset α of the trailer relative to the target location (120);
determining (S2) whether the angular offset α of the trailer relative to the target location is within a predetermined alignment margin; and
shifting (S3) propulsion control to the driven wheels of the trailer (100B) for movement toward the target location in response to the angular offset α of the trailer (100B) being within the predetermined alignment margin.

10. The method of claim 9, wherein shifting (S3) comprises fully shifting the propulsion control to the driven wheels (120B) of the trailer (100B) by fully disengaging the driven wheels (120A) of the vehicle (100).

11. The method of claim 9, wherein shifting (S3) comprises partially shifting the propulsion control to the driven wheels (120B) of the trailer (100B) by partially disengaging the driven wheels (120A) of the vehicle (100).

12. The method of any of claims 9-11, wherein the trailer (100B) comprises a steerable axle, and the method further comprises controlling the steerable axle to fine-tune the alignment of the trailer relative to the target location (120).

13. The method of any of claims 9-12, wherein the target location is one of a series of sequential locations (140A, 140B, 140C, 140D) along a predefined path, and upon reaching the target location a subsequent location along the path becomes the target location, and wherein the method further comprises adjusting angular offset α of the trailer upon reaching each target location along the path.

14. The method of any of claims 9-13, wherein the method further comprises receiving input from a remote control (150) to allow operating the tractor-trailer combination from a position adjacent to the target location, thereby facilitating precise control over movement toward the target location.

15. A non-transitory computer-readable storage medium (460) comprising instructions (470), which when executed by the processing circuitry (410) of a control unit (110), cause the processing circuitry (410) to perform the method of any of claims 9-14.
